# EUROPÄISCHE PATENTANMELDUNG

(11) **EP 1 903 668 A2**
(43) Veröffentlichungstag der Anmeldung: **26.03.2008**
(21) Anmeldenummer: 07116704.3
(22) Anmeldetag: 19.09.2007
(51) Int. Cl.: H02P 7/00

(54) **Verfahren zur Ermittlung der Drehposition des Ankers eines Gleichstrommotors mit Kommutator**

(30) Priorität: 20.09.2006 DE 102006044070
(71) Anmelder: Behr-Hella Thermocontrol GmbH, 70190 Stuttgart (DE)
(72) Erfinder: Knittel, Otto, 59494, Soest (DE); Kriener, Michael, 33154, Salzkotten (DE)
(74) Vertreter: Hilleringmann, Jochen

(57) **Zusammenfassung**

Bei dem Verfahren zur Ermittlung der Drehposition des Ankers eines Gleichstrommotors mit Kommutator durch Auswertung des zeitlichen Verlaufs eines Ankerstromsignals des Gleichstrommotors, das eine periodische Welligkeit um einen Mittelwert und der Welligkeit überlagerte, durch Kommutierung hervorgerufene Strom-Ripple aufweist, wird das Ankerstromsignal einer Strom-Ripple-Detektoreinheit (30) zur Erkennung der Strom-Ripple des Ankerstromsignals zugeführt. Das Ankerstromsignal wird ferner einer Welligkeits-Detektoreinheit (34) zur Erkennung einer Halb- oder Vollwelle des Ankerstromsignals zugeführt. Die Strom-Ripple-Detektoreinheit (30) gibt für jeden erkannten Strom-Ripple einen Strom-Ripple-Impuls aus. Die Welligkeits-Detektoreinheit (34) gibt für jede Periode der Welligkeit einen Welligkeits-Impuls aus. Die Ausgangssignale beider Detektoreinheiten (30,34) werden einer logischen ODER-Verknüpfungseinheit (38) zur Erzeugung eines Verknüpfungssignals zugeführt. Innerhalb einer Periode der Welligkeit des Ankerstromsignals gibt zumindest eine der Detektoreinheiten (30,34) einen Impuls aus. Dadurch weist das Verknüpfungssignal pro Periode der Welligkeit des Ankerstromsignals einen Verknüpfungsimpuls auf.

## Beschreibung

Die Erfindung betrifft ein Verfahren zur Ermittlung der Drehposition des Ankers eines Gleichstrommotors mit Kommutator durch Auswertung des zeitlichen Verlaufs eines Ankerstromsignals des Gleichstrommotors, das eine periodische Welligkeit um einen Mittelwert und der Welligkeit überlagerte, durch Kommutierung hervorgerufene Strom-Ripple aufweist. Ein solches Verfahren kann beispielsweise bei Stellantrieben eingesetzt werden, um sensorlos die augenblickliche Bewegungsposition eines durch den Gleichstrommotor angetriebenen Stellgliedes ermitteln zu können. Insbesondere findet das Verfahren Anwendung in Kraftfahrzeugen bei automatischen Fensterhebern, elektrisch verstellbaren Sitzen, Drosselklappe des Verbrennungsmotor und Misch- bzw. Luftverteilklappen der Heizungs- bzw. Klimaanlage des Fahrzeuges.

Es ist bekannt, dass der zeitliche Verlauf des Ankerstroms eines Gleichstrommotors mit Kommutator Stromspitzen (nachfolgend Strom-Ripple genannt) aufweist, die auf das kurzzeitige Kurzschließen zweier Kollektorlamellen durch die Bürsten des Gleichstrommotors zurückzuführen sind. Aus DE 40 17 779 A1, DE 42 17 265 C2, DE 42 22 914 A1, DE 195 11 307 C1, EP 0 424 831 B1 und EP 0 459 435 B1 ist es bekannt, diese Strom-Ripple zu zählen, um die Drehlage des Ankers des Gleichstrommotors bzw. die Bewegungsposition eines vom Gleichstrommotor angetriebenen Stellgliedes zu ermitteln.

Ferner ist es bekannt, das Ankerstromsignal eines Kommutator-Gleichstrommotors anhand der Welligkeit zu untersuchen, um auf die Drehstellung oder die Anzahl von Umdrehungen des Ankers zu schließen. So zeigt beispielsweise US-A-5,898,288 die Detektion der Welligkeit eines Ankerstromsignals und eben gerade nicht die Detektion von Strom-Ripplen.

In dieser Druckschrift wird zwar von Strom-Ripplen gesprochen (siehe beispielsweise Spalte 5, Zeilen 30 bis 33); was aber letztendlich zeichnerisch in der Schrift dargestellt und gemeint ist, ist die Auswertung der Welligkeit des Ankerstromsignals. Die Welligkeit des Ankerstromsignals ist aber nur ein Charakteristikum für einen Gleichstrommotor mit Kommutator. Dem welligen Ankerstromsignal sind also die Stromrippel in Form von kurzen "Stromspitzen" überlagert. Diese Strom-Rippie sind gerade in US-A-5,898,288 nicht dargestellt. Dass gemeinhin die Welligkeit des Ankerstromsignals eines Gleichstrommotors mit Kommutator fälschlicherweise mit den "Ripplen" des Motorstroms gleichgesetzt wird, ergibt sich überdies auch aus DE-C-197 29 238. In diesem Zusammenhang sei beispielsweise auf den letzten Satz der Zusammenfassung auf dem Deckblatt dieser Druckschrift verwiesen. Die Druckschrift selbst befasst sich mit der Berechnung des Zeitpunkts, zu dem ein Ripple (eine Halbwelle) im Ankerstromsignal zu erwarten ist. Bei der Halbwelle handelt es sich aber gerade nicht um einen Strom-Ripple.

Problematisch bei den bekannten Ripple-Count-Verfahren ist, dass Last- und Leerlaufzustände des Gleichstrommotors existieren, in denen die Detektion des Strom-Ripple nicht ausreichend zuverlässig erfolgt. Auch kann es je nach Verwendung eines Gleichstrommotors mit Kommutator (Gleichstrommotor mit asymmetrischem oder symmetrischem Motor) dazu kommen, dass zusätzliche Strom-Ripple entstehen, die, wenn sie mitgezählt würden, zu einem fehlerhaften Ergebnis führen würden.

Aufgabe der Erfindung ist es, ein Verfahren zur Ermittlung der Drehposition des Ankers eines Gleichstrommotors mit Kommutator durch Auswertung des zeitlichen Verlaufs des Ankerstromsignals des Gleichstrommotors zu schaffen, mit dem sich die Drehposition des Ankers und gegebenenfalls daraus die augenblickliche Verstellposition eines vom Gleichstrommotor angetriebenen Stellgliedes noch genauer und zuverlässiger bestimmen lässt.

Zur Lösung dieser Aufgabe wird mit der Erfindung ein Verfahren zur Ermittlung der Drehposition des Ankers eines Gleichstrommotors mit Kommutator vorgeschlagen, bei dem
- der zeitliche Verlauf eines Ankerstromsignals des Gleichstrommotors, das eine periodische Welligkeit um einen Mittelwert und der Welligkeit überlagerte, durch Kommutierung hervorgerufene Strom-Ripple aufweist, ausgewertet wird,
- das Ankerstromsignal einer Strom-Ripple-Detektoreinheit zur Erkennung der Strom-Ripple des Ankerstromsignals zugeführt wird,
- das Ankerstromsignal ferner einer Welligkeits-Detektoreinheit zur Erkennung einer Halb- oder Vollwelle des Ankerstromsignals zugeführt wird,
- die Strom-Ripple-Detektoreinheit für jeden erkannten Strom-Ripple einen Strom-Ripple-Impuls ausgibt,
- die Welligkeits-Detektoreinheit für jede Periode der Welligkeit einen Welligkeits-Impuls ausgibt und
- die Ausgangssignale beider Detektoreinheiten einer logischen ODER-Verknüpfungseinheit zur Erzeugung eines Verknüpfungssignals zugeführt werden,
- wobei innerhalb einer Periode der Welligkeit des Ankerstromsignals zumindest eine der Detektoreinheiten (30,34) einen Impuls ausgibt und dadurch das Verknüpfungssignal pro Periode der Welligkeit des Ankerstromsignals einen Verknüpfungsimpuls aufweist.

Nach der Erfindung wird sinngemäß ein zweites Kriterium untersucht, um sicher detektieren zu können, dass sich der Motor bzw. der Anker des Motors um einen Winkelbetrag gedreht hat, bei dem ein Strom-Ripple hätte erkannt werden müssen. Hierdurch ist es möglich, auch dann den Zähler für die Strom-Ripple zu inkrementieren, obwohl auf Grund der besonderen augenblicklichen Betriebssituation des Motors ein Strom-Ripple nicht erkannt wurde. Durch die Erfindung wird auch das Zählen von an sich nicht zu erwartenden Strom-Ripple unterdrückt, die je nach dem augenblicklichen Belastungs- und Operationszustand des Gleichstrommotors entstehen können.

Die Erfindung macht sich die Erkenntnis zunutze, dass das Ankerstromsignal eines Gleichstrommotors infolge der Ummagnetisierung eine gewisse (Grund-) Welligkeit aufweist, also periodisch um einen Mittelwert im wesentlichen sinusförmig schwingt. Dieser Sinuswelle überlagert sind die durch die Kommutierung hervorgerufenen Strom-Ripple. Pro Periode der Welligkeit existiert ein Strom-Ripple.

Erfindungsgemäß wird nun alternativ entweder der Strom-Ripple oder eine Periode der Welligkeit erkannt, um einen Zählimpuls zu erzeugen. Die Anzahl der Zählimpulse wird dann genutzt, um in Abhängigkeit von der Polung bzw. Nutung des Gleichstrommotors die Lage von dessen Anker zu ermitteln.

Erfindungsgemäß wird also das Ankerstromsignal zwei Detektoreinheiten zugeführt, und zwar einer Strom-Rippie-Detektoreinheit und einer Welligkeits-Detektoreinheit. In jeder Detektoreinheit wird für jedes detektierte Ereignis (Strom-Ripple- oder Welligkeits-Detektion) ein Zählimpuls ausgegeben. Die Ausgangssignale beider Detektoreinheiten werden einer logischen ODER-Operation unterzogen, wodurch ein Verknüpfungssignal entsteht. Erfindungsgemäß weist das Verknüpfungssignal pro Periode der Welligkeit des Ankerstromsignals einen Verknüpfungsimpuls auf, wenn innerhalb einer Periode der Welligkeit des Ankerstromsignals das Ausgangssignal zumindest einer der Detektoreinheiten einen Zählimpuls aufweist.

Bei dem erfindungsgemäßen Verfahren wird also das Ankerstromsignal in zweifacher Hinsicht untersucht, um pro Periode seiner Welligkeit einen Zählimpuls auszugeben. Durch die Untersuchung des Ankerstromsignals auf dessen Welligkeit einerseits und der Existenz der der Welligkeit überlagerten Strom-Rippie andererseits hin ist eine Gesamtdetektion des Ankerstromsignals gegeben, die in sämtlichen Betriebsbedingungen des Gleichstrommotors zuverlässig Zählimpulse erzeugt, die repräsentativ für die Lage des Ankers sind. Beim Beschleunigen und Abbremsen des Gleichstrommotors sind die Strom-Ripple im Ankerstromsignal gut detektierbar, da das Signal-zu-Rausch-Verhältnis entsprechend gut ist. Im Last- bzw. Leerlauffall können bei einem asymmetrischen Motor zusätzliche fehlerhaft erkannte Strom-Ripple bzw. bei einem symmetrischen Motor relativ kleine Strom-Ripple entstehen, die nur schwer zu detektieren sind. In diesen beiden Betriebszuständen eines asymmetrischen oder symmetrischen Motors leistet die Welligkeits-Detektion gute Dienste, da sich in sämtlichen dieser Betriebszustände eine relativ ausgeprägte Welligkeit im Ankerstromsignal zeigt.

Das erfindungsgemäße Verfahren kann nun beispielsweise zur Ermittlung der Position eines von dem Gleichstrommotor bewegbaren Elements verwendet werden, indem anhand der Verdrehung des Ankers und des bekannten Zusammenhangs zwischen dem Ausmaß der Verdrehung des Ankers und dem Ausmaß der Bewegung des Elements dessen aktuelle Bewegungsposition ermittelt wird. Insbesondere lässt sich das erfindungsgemäße Verfahren bei einer Fahrzeug-Innenraumtemperaturregelung einsetzen, bei der die Position eines von dem Gleichstrommotor angetriebenen Stellgliedes anhand des erfindungsgemäßen Verfahrens ermittelt wird, wobei das Stellglied die dem Innenraum zuzuführende Wärmemenge oder die Verteilung der dem Innenraum zuzuführenden Wärmemenge beeinflusst.

In vorteilhafter Weiterbildung der Erfindung ist vorgesehen, dass, nachdem im Verknüpfungssignal ein Verknüpfungsimpuls erzeugt worden ist, der nächstfolgende Verknüpfungsimpuls erst dann wieder erzeugt wird, sobald nach Ablauf einer Zeitdauer von z.B. der Hälfte der Periode der Welligkeit des Ankerstromsignals das Ausgangssignal zumindest einer der Detektoreinheiten einen Impuls aufweist. Bei dieser Variante wird die Erzeugung eines Verknüpfungsimpulses für die Hälfte der Periode der Welligkeit des Ankerstromsignals unterdrückt. Hierdurch wird zuverlässig verhindert, dass versehentlich pro Periode der Welligkeit des Ankerstromsignals zwei Impulse im Verknüpfungssignal erzeugt werden oder dass Impulse mitgezählt werden, die z.B. auf Grund von Störungen des Ankerstromsignals irrtümlich erzeugt werden.

Die Impulse der Welligkeits-Detektoreinheit werden anhand der Amplitude des Ankerstromsignals erzeugt. Überschreitet das Ankerstramsignal eines vorgebbare Mindestamplitude, so wird ein Welligkeits-Impuls erzeugt, der beispielsweise dann beendet wird, wenn die Amplitude wieder unterhalb des vorgebbaren Wertes fällt. Der nächste Welligkeits-Impuls wird erst dann erzeugt, wenn die Amplitude beim nächsten Mal wieder den vorgebbaren Wert überschreitet.

In vorteilhafter Weiterbildung der Erfindung ist ferner vorgesehen, dass das Ankerstromsignal einer Tiefpassfilterung unterzogen wird, um den Mittelwert des Ankerstromsignals, um den das Ankerstromsignal im wesentlichen sinusförmig schwingt, zu ermitteln.

Die Detektion von Strom-Ripplen kann auf unterschiedliche Arten und Weisen erfolgen. So ist es beispielsweise denkbar, mit einer Pegeldetektion zu arbeiten. Ein gewisser Nachteil der Pegeldetektion besteht darin, dass die Strom-Ripple je nach Lastzustand bzw. Betriebszustand des Gleichstrommotors unterschiedliche Größen aufweisen. Sofern die potentiellen Strom-Ripple-Größen bekannt sind, kann mit einer Pegeldetektion gearbeitet werden, um die Strom-Ripple zu detektieren. Beispielsweise müsste man als Schwellwert einen Wert vorgeben, der kleiner als der in sämtlichen Betriebszuständen des Gleichstrommotors zu erwartende kleinste Strom-Ripple ist bzw. der Schwellwert müsste entsprechend dem Ankerstromverlauf nachgeführt werden.

Alternativ zur Pegeldetektion bietet sich für die Erkennung der Strom-Ripple eine Flankendetektion an. Danach wird in der Strom-Ripple-Detektoreinheit ein Ripple-Impuls erzeugt, wenn im Ankerstromsignalverlauf eine vorgebbare Mindeststeilheit mit vorgebbarer Mindestamplitude erkannt wird.

Bei einer weiteren vorteilhaften Ausgestaltung der Erfindung wird der Gleichstrommotor über eine Vollbrücke mit zwei High-Side-Transistoren und zwei Low-Side-Transistoren angesteuert, wobei das Ankerstromsignal durch Messung des Einschaltwiderstandes des je nach Drehrichtung des Ankers vom Ankerstrom durchflossenen Low-Side-Transistors erhalten wird. Die Einschaltwiderstände der beiden Low-Side-Transistoren sind also messtechnisch erfassbar. Für die Untersuchung des Ankerstromsignalverlaufs wird jeweils derjenige Low-Side-Transistor verwendet, der gerade stromdurchflossen ist, was von der Drehrichtung des Ankers abhängig ist. Der Vorteil der Heranziehung der Low-Side-Transistoren für die Untersuchung des Ankerstromsignals besteht darin, dass auch in der Bremsphase des Motors die Untersuchung von dessen Ankerstromsignalverlauf möglich ist. Denn in der Bremsphase sind beide Low-Side-Transistoren stromdurchflossen (Kurzschluss des Gleichstrommotors gegenüber Masse). Somit lässt sich sowohl beim Beschleunigen als auch beim Abbremsen über die Vollbrücke jeweils der Ankerstrom abgreifen, was zur zuverlässigen Detektion des Ankers des Gleichstrommotors in sämtlichen Betriebszuständen (Beschleunigung, Abbremsung, Weiterdrehung des Motors ohne und mit Last) erforderlich ist.

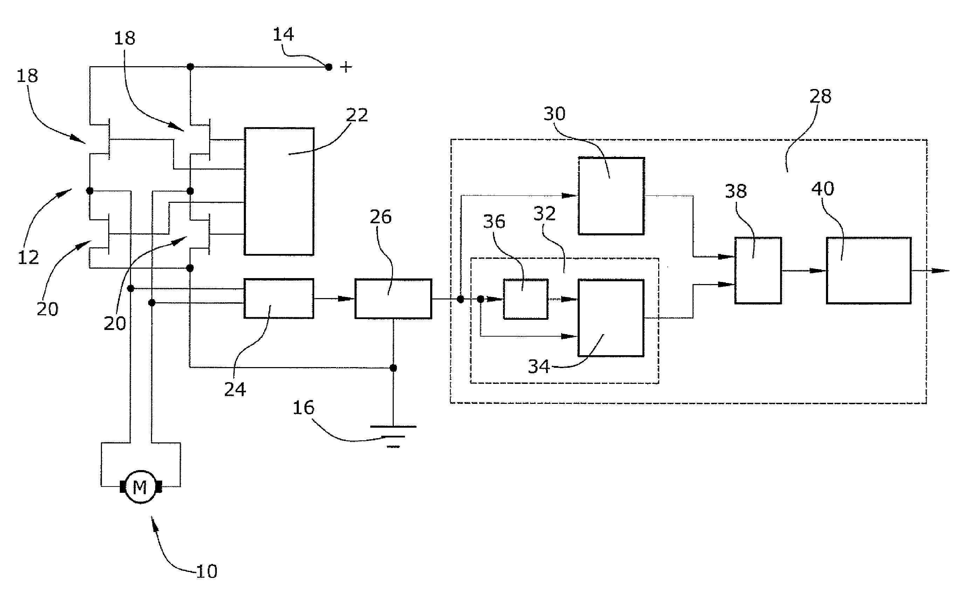

Anhand der Zeichnung wird nachfolgend eine Schaltung zur schaltungstechnischen Umsetzung des erfindungsgemäßen Verfahrens näher erläutert.

Wie in der Zeichnung angegeben, wird ein Gleichstrommotor 10 mit Kommutierung, dessen Ankerstromsignalverlauf untersucht werden soll, über eine Transistor-Vollbrücke 12 angesteuert. Diese Transistor-Vollbrücke 12 befindet sich zwischen einem Versorgungspotential 14 und Masse 16 und weist zwei High-Side-Transistoren 18 sowie zwei Low-Side-Transistoren 20 auf. Sämtliche Transistoren 18,20 werden über eine Ansteuereinheit 22 angesteuert. Im Brückenzweig der Transistor-Vollbrücke 12 befindet sich der zu untersuchende Gleichstrommotor 10. Dessen Ankerstrom wird durch eine Strommesseinrichtung 24 messtechnisch erfasst, wodurch der Verlauf des Ankerstromsignals messtechnisch erfasst ist. Die Strommessung wird bei diesem Ausführungsbeispiel durch eine Widerstandsmessung der R_{SD-ON}-Widerstandes des jeweiligen stromdurchflossenen Low-Side-Transistors 20 realisiert.

Das Ausgangssignal der Strommesseinrichtung 24 wird in einem Verstärker 26 verstärkt und einem Detektor 28 zugeführt. Der Detektor 28 umfasst eine Ripple-Detektoreinheit 30 und eine weitere Detektoreinheit 32. Die Ripple-Detektoreinheit 30 ermittelt auf an sich bekannte Art und Weise die Strom-Ripple im Ankerstromsignalverlauf, was beispielsweise durch eine Flanken- oder Pegeldetektion erfolgt. Die weitere Detektoreinheit 32 umfasst eine Welligkeits-Detektoreinheit 34, der zum einen das Ausgangssignal des Verstärkers 26, also das Ankerstromsignal zugeführt wird und zum anderen das mit Hilfe eines Tiefpassfilters 36 tiefpassgefilterte Ankerstromsignal zugeführt wird. Das Ausgangssignal des Tiefpassfilters 36 gibt dem Verlauf des Mittelwertes an, um den das Ankerstromsignal im wesentlichen sinusförmig schwingt.

In der Ripple-Detektoreinheit 30 wird für jeden erkannten Strom-Ripple ein Zählimpuls (Ripple-Impuls) erzeugt. In der Welligkeits-Detektoreinheit 34 wird für jede Periode der Welligkeit des Ankerstromsignals ein Zählimpuls (Welligkeits-Impuls) erzeugt. Für die korrekte Ermittlung der Lage des Ankers ist es erforderlich, dass pro Periode der Welligkeit des Ankerstromsignals ein Zählimpuls durch den Detektor 28 erzeugt wird. Daher werden die Ausgänge beider Detektoreinheiten 30 und 34 einer logischen ODER-Verknüpfungseinheit 38 zugeführt, der eine Verriegelungsschaltung 40 nachgeschaltet ist, die dafür sorgt, dass der nächste von der ODER-Verknüpfungseinheit 38 veranlasste Impuls im Verknüpfungssignal erst nach Ablauf einer vorgebbaren Mindestdauer (beispielsweise der halben Periodendauer der Welligkeit) erzeugt wird. Mit anderen Worten sorgt also die Verriegelungsschaltung 40 für eine Unterdrückung der Weiterleitung bzw. für eine Unterdrückung der Erzeugung eines (Verknüpfungssignal-)Impulses am Ausgang der Verriegelungsschaltung 40, sobald die ODER-Verknüpfungseinheit 38 angesprochen hat, wobei die Unterdrückung für die Dauer der halben Periode der Welligkeit des Ankerstromsignals anhält. Hierdurch wird sichergestellt, dass pro Periode der Welligkeit entweder ein durch die Ripple-Detektoreinheit 30 erzeugter Impuls oder ein durch die Welligkeits-Detektoreinheit 34 erzeugter Impuls als Zählimpuls zur Ermittlung der aktuellen Drehlage des Ankers genutzt wird, wodurch verhindert wird, dass die gegebenenfalls von beiden Detektoreinheiten 30,34 erzeugten Impulse ausgewertet werden, was nicht korrekt wäre.

### BEZUGSZEICHENLISTE

- 10: Gleichstrommotor
- 12: Transistor-Vollbrücke, Vollbrücke
- 14: Versorgungspotential
- 16: Masse
- 18: High-Side-Transistoren
- 20: Low-Side-Transistoren
- 22: Ansteuereinheit
- 24: Strommesseinrichtung
- 26: Verstärker
- 28: Detektor
- 30: Strom-Ripple-Detektoreinheit
- 32: Detektoreinheit
- 34: Welligkeits-Detektoreinheit
- 36: Tiefpassfilter
- 38: ODER-Verknüpfungseinheit
- 40: Verriegelungsschaltung

## Patentansprüche

1. Verfahren zur Ermittlung der Drehposition des Ankers eines Gleichstrommotors mit Kommutator durch Auswertung des zeitlichen Verlaufs eines Ankerstromsignals des Gleichstrommotors, das eine periodische Welligkeit um einen Mittelwert und der Welligkeit überlagerte, durch Kommutierung hervorgerufene Strom-Ripple aufweist, wobei bei dem Verfahren
- das Ankerstromsignal einer Strom-Ripple-Detektoreinheit (30) zur Erkennung der Strom-Ripple des Ankerstromsignals zugeführt wird,
- das Ankerstromsignal ferner einer Welligkeits-Detektoreinheit (34) zur Erkennung einer Halb- oder Vollwelle des Ankerstromsignals zugeführt wird,
- die Strom-Ripple-Detektoreinheit (30) für jeden erkannten Strom-Ripple einen Strom-Ripple-Impuls ausgibt,
- die Welligkeits-Detektoreinheit (34) für jede Periode der Welligkeit einen Welfigkeits-Impuls ausgibt und
- die Ausgangssignale beider Detektoreinheiten (30,34) einer logischen ODER-Verknüpfungseinheit (38) zur Erzeugung eines Verknüpfungssignals zugeführt werden,
- wobei innerhalb einer Periode der Welligkeit des Ankerstromsignals zumindest eine der Detektoreinheiten (30,34) einen Impuls ausgibt und **dadurch** das Verknüpfungssignal pro Periode der Welligkeit des Ankerstromsignals einen Verknüpfungsimpuls aufweist.

2. Verfahren nach Anspruch 1, **dadurch gekennzeichnet, dass**, nachdem im Verknüpfungssignal ein Verknüpfungsimpuls erzeugt worden ist, der nächstfolgende Verknüpfungsimpuls erst dann wieder erzeugt wird, sobald nach Ablauf einer Zeitdauer von der Hälfte der Periode der Welligkeit des Ankerstromsignals zumindest eine der Detektoreinheiten (30,34) einen Impuls ausgibt.

3. Verfahren nach Anspruch 1 oder 2, **dadurch gekennzeichnet, dass** in der Welligkeits-Detektoreinheit (34) ein Welligkeits-Impuls erzeugt wird, sobald erkannt wird, dass der Augenblickswert des Ankerstromsignals um einen vorgebbaren Wert entweder kleiner oder größer als der Mittelwert des Ankerstromsignals ist.

4. Verfahren nach einem der Ansprüche 1 bis 3, **dadurch gekennzeichnet, dass** der Mittelwert des Ankerstromsignals durch ein Tiefpassfilter (36) ermittelt wird.

5. Verfahren nach einem der Ansprüche 1 bis 4, **dadurch gekennzeichnet, dass** in der Strom-Rippie-Detektoreinheit (30) ein Ripple-Impuls erzeugt wird, wenn im Ankerstromsignal eine vorgebbare Mindeststeilheit gegebenenfalls mit vorgebbarer Mindestamplitude erkannt wird.

6. Verfahren nach einem der Ansprüche 1 bis 5, **dadurch gekennzeichnet, dass** der Gleichstrommotor (10) über eine Vollbrücke (12) mit zwei High-Side-Transistoren (18) und zwei Low-Side-Transistoren (20) angesteuert wird und dass das Ankerstromsignal durch Messung des Einschaltwiderstandes des jeweiligen je nach Drehrichtung des Ankers vom Ankerstrom durchflossenen Low-Side-Transistors (20) erhalten wird.

7. Verwendung des Verfahrens nach einem der Ansprüche 1 bis 6 zur Ermittlung der Position eines von dem Gleichstrommotor bewegbaren Elements anhand der Verdrehung des Ankers des Gleichstrommotors und des bekannten Zusammenhangs zwischen dem Ausmaß der Verdrehung des Ankers des Gleichstrommotors und dem Ausmaß der Bewegung des Elements.

8. Verwendung des Verfahren nach einem der Ansprüche 1 bis 6 bei der Regelung der Innenraumtemperatur von Fahrzeugen, bei der der Gleichstrommotor ein Stellglied zur Beeinflussung der im Innenraum eines Fahrzeuges zuzuführenden Wärmemenge oder zur Beeinflussung des Ortes, von dem aus dem Innenraum eine Wärmemenge zugeführt wird, ansteuert, wobei ein Lagesignal, das die augenblickliche Position des Stellgliedes angibt, anhand der Anzahl der Verknüpfungsimpulse ermittelt wird.
